# EUROPEAN PATENT APPLICATION

(11) **EP 2 455 882 A2**
(43) Date of publication of application: **23.05.2012**
(21) Application number: 12152120.7
(22) Date of filing: 08.04.2004
(51) Int. Cl.: G06F 21/00

(54) **Memory protection systems and methods for writable memory**

(30) Priority: 06.05.2003 US 46837103 P; 10.10.2003 US 50986903 P; 31.03.2004 US 813003
(62) Divisional of application: 04726405.6
(71) Applicant: Nortel Networks Limited, St. Laurent, Quebec H4S 2A9 (CA)
(72) Inventor: Chow, Jerry, Kanata, Ontario K2K 2J8 (CA)
(74) Representative: Bird Goën & Co

(57) **Abstract**

Protected memory locations or contents are associated with respective corresponding keys. Memory operations that alter the protected memory locations or contents are denied unless the corresponding keys are provided. In one implementation, the keys are stored in a key store on an electronic device and accessible only to a memory access manager that controls access to the protected memory and contents. In order to alter a protected memory location or contents, an electronic device component must first obtain the required key or keys from another source, such as a source from which data to be written to a protected memory location is received, and then provide the or each key to the memory access manager. After a memory operation has been permitted or completed, any keys provided to the memory access manager by an electronic device component are rendered inaccessible, such as by deleting the keys from memory.

## Description

### Field of the Invention

This invention relates generally to memory protection, and in particular to controlling memory operations that alter contents in a writable memory.

### Background of the Invention

Protection of software programs and other information stored in memory on an electronic device against corruption is becoming increasingly difficult. Malicious software code such as viruses is perhaps the most common cause of data corruption. Electronic device users also often inadvertently overwrite, delete, or otherwise alter stored data, by executing an update function of a stored software program, for example.

In one known technique intended to protect stored data in electronic device memory, keys or key sequences that are required to alter the data are stored in the memory along with the data. Software programs and utilities, including malicious, defective, and inadvertently executed code, on the same electronic device thereby have access to the keys or key sequences. As such, the level of protection afforded by this technique is limited.

According to another known technique, keys or key sequences are embedded into or otherwise accessible to software programs and utilities that are capable of memory access. These types of protections schemes are also of limited value, as the keys or sequences are known or remain accessible to such programs or utilities.

Storage of important data to read-only memory protects the data, but precludes such functions as software update via download, over-the-air (OTA) provisioning on wireless communication devices, and similar functions requiring writable memory.

### Summary of the Invention

A memory protection system in accordance with an aspect of the invention includes a key store and a memory access manager. The key store stores identifiers of protected memory locations and respective corresponding memory protection keys. The memory access manager receives a memory command for altering contents of the protected memory locations. For each such memory command, the memory access manager determines whether the memory command includes a memory protection key corresponding to at least one of the protected memory locations to be altered. In instances where the memory command includes the memory protection key corresponding to the at least one of the protected memory locations to be altered, the memory access manager permits the memory command and then renders each memory protection key in the command inaccessible.

The identifiers in the key store may include one or more of addresses in a protected memory, names of protected files, and identifiers of data entries in a protected memory.

According to another embodiment of the invention, an electronic device includes a memory, a receiver configured to receive data to be written to the memory, and a memory protection system. The memory protection system associates protected memory locations in the memory with respective corresponding keys, and allows the received data to be written to any of the protected memory locations only if the received data includes a key corresponding to a protected memory location to which the received data is to be written. The memory protection system also renders the corresponding key in the received data inaccessible after allowing the received data to be written to the protected memory location. In one embodiment, the memory protection system includes a key store and a memory access manager.

A related method of protecting memory in an electronic device is provided in accordance with a still further aspect of the invention. The method includes receiving a memory command to alter a protected memory location, identifying a memory protection key corresponding to the protected memory location, determining whether the memory command includes the memory protection key corresponding to the protected memory location, permitting completion of the memory command where the memory command includes the memory protection key corresponding to the protected memory location, and rendering the memory protection key in the memory command inaccessible.

According to one embodiment, the memory protection key corresponding to the protected memory location is accessed in a key store. In response to receiving a command to establish a new protected memory location in the memory and a memory protection key corresponding to the new protected memory location, the new protected memory location is established in the memory and the memory protection key is stored in the key store.

The invention also provides, in a further aspect, a method of protecting electronic memory, including steps of configuring a memory store and a processor of an electronic device. The memory store is configured into at least one protected memory location and a key store operable to store an identifier of each protected memory location and a respective corresponding memory protection key, and the processor is configured to provide a memory access manager. The memory access manager is operable to receive memory commands for altering contents of any of the at least one protected memory location, and for at least one memory command, to determine whether the memory command includes a memory protection key corresponding to at least one protected memory location to be modified, the memory command including the memory protection key corresponding to at least one protected memory location to be modified, to permit the memory command and then render each corresponding memory protection key in the command inaccessible. Configuring the processor preferably includes installing memory access manager software on the electronic device for execution by the processor.

Any of the methods according to embodiments of the invention may be implemented as instructions stored on a computer-readable medium. The computer-readable medium may also store other instructions or software, such as the memory access manager software, for example.

Other aspects and features of the present invention will become apparent to those ordinarily skilled in the art upon review of the following description of the specific embodiments of the invention.

### Brief Description of the Drawings

The invention will now be described in greater detail with reference to the accompanying diagrams, in which:
Fig. 1 is a block diagram of an example electronic device;
Fig. 2 is a block diagram of a memory-to-key mapping table; and
Fig. 3 is a flow diagram of a method of protecting memory according to an embodiment of the invention.

### Detailed Description of Preferred Embodiments

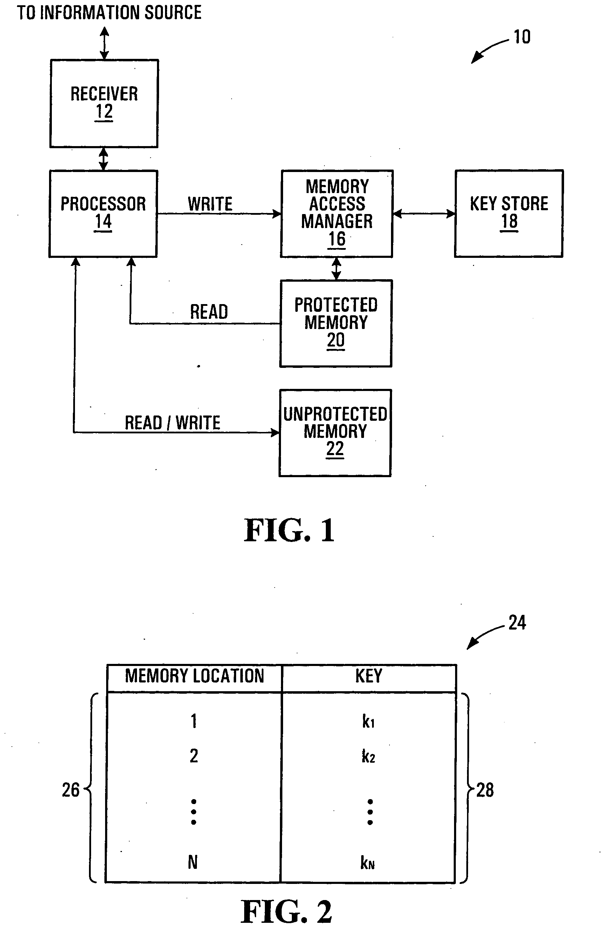

Fig. 1 is a block diagram of an example electronic device, such as an automated processing system or article having an automated processing system, in which the present invention may be implemented. The electronic device 10 includes a receiver 12, connected to a processor 14. The processor 14 is connected to a memory access manager 16, a protected memory 20, and an unprotected memory 22. A key store 18 and the protected memory 20 are connected to the memory access manager 16.

It should be appreciated that only those components related to memory protection have been shown in Fig. 1 to avoid congestion in the drawing, and that the manner by which other components (data inputs, displays, etc.) often associated with electronic devices associate with the above-referenced memory components is well understood in the art. The electronic device 10 represents one example of the type of electronic device to which the present invention is applicable. The invention is in no way restricted to the particular electronic device 10, and may be implemented in other types of electronic devices having further, fewer, or different components than those shown in Fig. 1. For instance, many electronic devices include such components as a display and an input such as keyboard or other input/output devices. Also, electronic devices in which all memory resources are protected do not include the unprotected memory 22. Other variations of electronic devices will be apparent to those skilled in the art to which the present invention pertains.

The receiver 12 enables the electronic device 10 to at least receive information from information sources, and varies with the type of the electronic device 10. The present invention is in no way limited to any particular type of receiver 12, or to electronic devices that support only one-way communications. Transmit operations may also be supported in electronic devices without impacting memory protection as disclosed herein.

In a wireless communication device such as a mobile data communication device or a mobile telephone, the receiver 12 is a wireless receiver, or more commonly a wireless transceiver, configured for operation in a wireless communication network. An electronic device 10 in the form of a personal computer, such as a desktop or notebook PC (irrespective of operating system), typically includes a wired or wireless modem or network interface for communication functions, particularly in conjunction with the provision of broadband or wideband services. The electronic device can also be in the form of a PDA (personal digital assistant) or PDA hybrid offering services (telephony, Internet, photographic, etc.) in addition to more conventional organization functions.

Other common types of electronic device interface include serial and parallel ports, Universal Serial Bus (USB) ports, infrared ports such as Infrared Data Association (IrDA) ports, and short-range wireless communication modules such as 802.11 modules and Bluetooth™ modules. It will be apparent to those skilled in the art that "802.11" and "Bluetooth" refer to sets of specifications, available from the Institute of Electrical and Electronics Engineers (IEEE), relating to wireless local area networks and wireless personal area networks, respectively. Although shown as a single block in Fig. 1, the receiver 12 may incorporate multiple communications interfaces. Wireless communication devices, for example, often include an interface for exchanging data with a local computer system, in addition to a wireless transceiver.

It will thus be apparent that the receiver 12 need not necessarily be a communication signal receiver. The receiver 12 may be any type of input device or interface through which an electronic device receives inputs.

The processor 14 is preferably a microprocessor that executes operating system software and software applications to control operation of the electronic device 10. As used herein, the term "microprocessor" includes, for example, application specific integrated circuits ("ASICs") and digital signal processors ("DSPs"), as well as general purpose processors. As described in further detail below, software code often includes modules or subroutines that access electronic device memory.

The memory access manager 16 and the key store 18 represent one embodiment of a system for protecting memory of the electronic device 10, specifically the protected memory 20. The key store 18 is a secure memory, or at least resides at a secure memory location, preferably outside any file system accessible to the processor 14 or other components of the electronic device 10. Keys or key sequences required to alter the contents of the protected memory 20 are stored in the key store 18.

Keys or key sequences, hereinafter referred to primarily as "keys", are data sequences that have an acceptably small probability of occurring in any data stored on the electronic device 10. The length and value of each key is specifically selected in accordance with a degree of desired protection. Generally, longer keys provide greater protection, but involve more processor-intensive checking operations and increased overhead in data transmissions to the electronic device 10.

In accordance with an aspect of the invention, all memory operations that alter the contents of the protected memory 20 are routed to the memory access manager 16. For the purposes of illustration, such memory operations originating with software code are associated with the processor 14 and represented as the "write" connection between the processor 14 and the memory access manager 16. In other embodiments of electronic devices, further connections between the memory access manager 16 and other software or hardware components of the electronic device are provided as necessary.

The memory access manager 16 may itself be a software module that is called whenever write access to the protected memory 20 is required. In one embodiment, software applications for the electronic device 10 are configured for write access to the protected memory 20 through an application programming interface (API) or function call associated with the memory access manager 16. According to other embodiments, the memory access manager 16 is hardware- or firmware-based, and possibly integrated with the key store 18 and the protected memory 20.

In the electronic device 10, the memory components 18, 20, and 22 are implemented in one or more shared memory devices or in dedicated memory devices. For example, the protected memory 20 and the unprotected memory 22 are distinct partitions in the same memory device in one embodiment. In another embodiment, the protected memory 20 is implemented in a non-volatile memory such as a Flash memory device or a battery backed-up random access memory (RAM) and the unprotected memory 22 is implemented in a volatile memory such as RAM. Each memory component 18, 20, and 22 may also include different types of memory. In most embodiments however, the key store 18 is implemented in non-volatile memory to prevent loss of stored keys if power to the key store 18 is lost. The protected memory 20 is also preferably implemented at least partially in non-volatile memory. Protection of data loss upon power interruption is likely also desirable for any data that warrants protection from corruption.

Since the processor 14 has read access to the protected memory 20, the key store 18 is preferably implemented in a separate memory device or a location in a shared memory device that is accessible or addressable only by the memory access manager 16. Addressable memory ranges in a shared memory device may be established, for example, by providing switched potentials on address lines of the memory device. In this instance, the memory access manager 16 maintains one or more switches in predetermined positions, and thus maintains predetermined potentials on selected address lines, depending on a current memory operation. The predetermined potentials effectively restrict the memory locations that can be addressed.

Despite any segregation of shared memory, or even implementation of the key store 18 in a dedicated memory device, the key store 18 is prone to at least a hardware security attack. In such an attack, the memory device in which the key store 18 is implemented is physically accessed and read. Although implementation of the key store 18 in a volatile memory device defeats such an attack in that the keys in the key store 18 are lost when power is removed from the memory device, the keys will also be lost if the electronic device 10 loses power.

In order to prevent a compromise of the keys in the key store 18 in the event of a hardware attack while providing for retention of the contents of the key store 18 during loss of power, the keys are preferably stored in a modified form, preferably a hash. A hashing algorithm generates a unique output or hash for each unique input, such that determination of an original input from a corresponding hash is computationally infeasible. One known hashing algorithm that may be used for keys is the Secure Hashing Algorithm 1 (SHA-1), although other hashing algorithms may be used. Other types of transformation such as encryption may also or instead be applied to keys before they are stored in the key store 18. Such storing of the keys in the key store 18 in modified form also makes a compromise of the keys less likely if software-based memory segregation is somehow circumvented so that the key store 18 is read by a device component other than the memory access manager 16.

In operation, the key store 18 is populated with protected memory location identifiers, such as address ranges in the protected memory 20, and corresponding keys required to unlock the address ranges for memory write operations. In a preferred embodiment, the protected memory 20 is partitioned into blocks with write access to each block protected by a corresponding key. A protected memory block can only be written to if the specific corresponding key is known to the program or device component attempting to write to the block. In other embodiments, memory protection is also or instead implemented on a per-file or per-entry basis. Thus, memory blocks, files, data entries, or any combination thereof, can be protected by corresponding keys.

Fig. 2 is a block diagram of a memory-to-key mapping table that maps protected memory locations to corresponding keys in the key store 18. As shown, the mapping table 24 includes N memory location identifiers 26 and N corresponding keys K₁ through K_{N}, designated 28. The memory location identifiers 26, as will be apparent from the description above, may identify a memory blocks, files, or data entries. When a memory write operation for a protected memory location is received by the memory access manager 16, the mapping table 24 in the key store 18 is accessed to determine the corresponding key 28 required to unlock that protected memory location. The mapping table 24 is one illustrative example of a data structure in the key store 18 that supports determination of a corresponding key for a protected memory location. The invention is not limited to this or any other particular key determination technique or data structure.

At least some of the memory location identifiers and keys are preferably loaded into the key store 18 by an authorized entity that requires or desires protection of stored data. For example, a manufacturer of the electronic device 10 may wish to protect operating system software against corruption, while providing for remote updates as new releases become available. This scenario is particularly common where the electronic device 10 is a wireless communication device for which over-the-air ("OTA") software updates are to be supported. The manufacturer then establishes a key for the operating system software, stores a record of the key, and loads identifiers for the memory location(s) of the operating system, such as a file list or memory address range, and the key into the key store 18. The key is thereby accessible only to the manufacturer and the memory access manager 16. Thereafter, remote updates to the operating system software are effected by including the key with any operating system software-related data transmitted to the electronic device 10.

In a similar manner, other entities, such as a wireless communication network service provider in the case of a wireless communication device, an owner of the electronic device 10, and a user of the electronic device 10 may establish protected memory locations and corresponding keys. Notably, an owner and a user of the electronic device 10 are not always the same entity, where the electronic device 10 is an employer-owned device provided to an employee user, for example.

In a preferred embodiment, each entity loads the key store 18 at an appropriate stage during the deployment of the electronic device 10. That is, a manufacturer loads its memory protection information, in the form of memory location identifiers and keys, into the key store 18 before the electronic device 10 is shipped to a customer. Similarly, a service provider establishes and loads its memory protection information for a wireless communication device during wireless communication service provisioning. An owner of the electronic device 10 loads its memory protection information before the device is provided to a user, and the user then loads user memory protection information into the key store 18 for any other memory locations for which protection is desired. Of course, further, fewer, or different entities than those mentioned above may establish memory protection information on the electronic device 10.

It should thus be apparent that new protected memory locations may be established, responsive to a command to establish a new protected memory location and a memory protection key corresponding to the new protected memory location, for instance. When such a command is received, and preferably after security operations such as authentication have been performed to ensure that the command is valid and should be permitted, the new protected memory location is established in the memory 20 and the memory protection key is stored in the key store 18.

After memory protection information has been established in the key store 18 for a memory location, identified by an address, file, or data entry as described above, any memory write operation affecting that memory location is subject to processing by the memory access manager 16. The memory access manager 16 determines the memory location affected by the memory write operation, and accesses the key store 18 to determine the key required to unlock the memory location. Unless the electronic device component or software module from which the memory write operation originated provides the corresponding key to the memory access manager 16, the memory write operation is denied. The memory write operation is allowed to proceed only if the correct key is supplied to the memory access manager 16.

In an illustrative example scenario, memory protection information has been loaded in the key store 18 for a software application that is installed in the protected memory 20 on the electronic device 10. The entity that provided the software application, referred to below as the application provider, established a key that is mapped to the memory location in the protected memory 20 at which the software application resides.

In the event that a user inadvertently initiates an update function configured to update the software application or a portion thereof, an update subroutine or module may attempt to over-write portions of the software application in the protected memory 20. Any resulting memory write operation from the processor 14 during execution of the update module is processed by the memory access manager 16, which accesses the key store 18 to identify the key required to unlock the corresponding memory location. As described above, keys in memory protection information are stored in the key store 18, which is not accessible to the update module. Therefore, any memory write operation attempted during this inadvertent update process is denied by the memory access manager 16, because the update module is unable to provide the correct key. In contrast, according to a known memory protection scheme, the key is embedded into the update module or remains accessible to the update module after a memory operation has been completed, such that the update module can provide the correct key even if initiated inadvertently.

Consider now a valid update process, where the user downloads from the application provider, or some other entity authorized by the application provider, new software code intended to replace a portion of the existing software application. Along with the new software code, the application provider sends to the electronic device 10 the corresponding key that was previously loaded into the key store 18. As will be apparent, the application provider is an information source with which the electronic device 10 communicates via the receiver 12.

In order to protect the key during transit, a secure communications link or protocol is preferably used for transfer of the software code and the key from the application provider to the electronic device 10. At least the key is preferably protected during transit so as to prevent a compromise of the key by an attacker that merely intercepts the download. Different levels of information security may be necessary for different types of transfer schemes. Where the receiver 12 is a wireless modem, for example, data encryption may be desired to protect the downloaded data during transfer to the electronic device 10. For a download via a connection that is physically secure, such as a USB connection to a local computer system, for example, encryption and other information security techniques may not be as important, as interception of a download over such a connection is less likely.

The received software code and key are decrypted or otherwise processed, if necessary, and then stored on the electronic device 10, such as in the unprotected memory 22. Downloads are preferably stored in volatile storage. Since such downloads include a memory protection key, volatile storage is preferred to defeat a hardware attack aimed at extracting keys from previously stored downloads. In another embodiment, the download, or at least the downloaded key, is stored in an encrypted or otherwise secure format.

An update module for the software application now has access to the stored download and thus the required key for unlocking the memory location in which the software application resides. In a preferred embodiment, the key is inserted at a predetermined position within the download by the application provider, in a header for example. The key is located in the stored download, extracted, and provided to the memory access manager 16 during a memory write operation. The memory access manager 16 then determines whether the extracted key matches the corresponding key loaded in the key store 18, and either denies or permits the memory write operation accordingly. The operation of determining whether the extracted key matches the key in the key store 18 may include a transformation on the extracted key or a reverse transformation on the key in the key store 18, where keys are modified for storage in the key store 18 as described above. For example, a hashing algorithm is applied to the extracted key if the key store 18 stores a hash of each key. A key match is determined if the hash of the extracted key matches the hash in the key store 18.

After the software application has been updated, the stored download, including the key, is deleted from memory. The key then remains only in the key store 18, and is not accessible by any other electronic device components than the memory access manager 16. Deletion of the download preferably renders at least the key inaccessible for any subsequent memory operations.

As those skilled in the art will appreciate, "deletion" of data from memory in known electronic devices may involve de-allocating memory pointers or addresses without actually removing the data from the memory at the time of deletion. According to an aspect of the invention, however, memory protection keys or key sequences are rendered inaccessible or unrecoverable when a memory access operation has been permitted, or when the operation has been completed. In a preferred embodiment, keys that are received and stored at an electronic device are rendered inaccessible by over-writing at least a portion of the keys with random or predetermined data. Even if memory locations at which keys were previously stored are accessed, the keys cannot be recreated.

The term "inaccessible", as used herein, encompasses any of the above deletion operations, alone or in combination. A key may be deleted by de-allocating pointers, overwriting the key or a portion thereof, or some combination of both. Other techniques for rendering the key inaccessible after a permitted memory operation may also be apparent to those skilled in the art without departing from the invention.

As received keys are thus no longer accessible after a current memory operation has been approved or completed, the keys cannot be recovered and reused in subsequent memory operations. The correct key for a protected memory location must be provided for each memory operation affecting that memory location. Techniques in accordance with embodiments of the invention thereby provide a greater level of memory protection than known techniques.

In the foregoing description, reference is made to the memory write operations and processing of such operations by the memory access manager 16. Those skilled in the art will appreciate that this processing may be enabled in several different ways. For example, in one embodiment, a device component sends a memory write command or request, including at least a memory location identifier. and preferably a key, to the memory access manager 16. From the memory location identifier, which is a memory address, file name, or data entry identifier, as described above, the memory access manager 16 identifies the corresponding required memory protection key in the key store 18 and determines whether the correct key has been provided in the memory write command. Where the correct key has been provided, the memory write command is allowed. The actual write operation is then performed either by the memory access manager 16, if the data to be written is provided to the memory access manager 16 with the memory write command or in response to an indication that the command is allowed, or by the device component that submitted the memory write command. In a preferred embodiment, the memory write command includes the data to be written to memory, the memory location identifier, and the key. This scheme ensures that the data that is to be written to protected memory cannot be substituted by the device component after the memory write command has been processed, unless a new memory write command including the required key is submitted.

The particular arrangement of components shown in Fig. 2 is one implementation of a memory protection system in an electronic device. In the electronic device 10, memory write commands or requests that address or affect the contents of the protected memory 20 are subject to processing by the memory access manager 16. In another embodiment, all memory commands are processed by the memory access manager 16. In this case, the memory access manager 16 determines a type of each memory command and whether the memory command will alter protected memory contents. Only those memory commands that will alter protected memory contents are further processed as described above by the memory access manager 16. All memory read commands, as well as memory write commands associated with unprotected memory, are permitted without further processing. Embodiments in which memory commands are pre-processed and routed to either the memory access manager 16 or directly to memory are also contemplated. Additional variations in memory access manager implementation will be apparent to those skilled in the art and as such, are considered to be within the scope of the present invention.

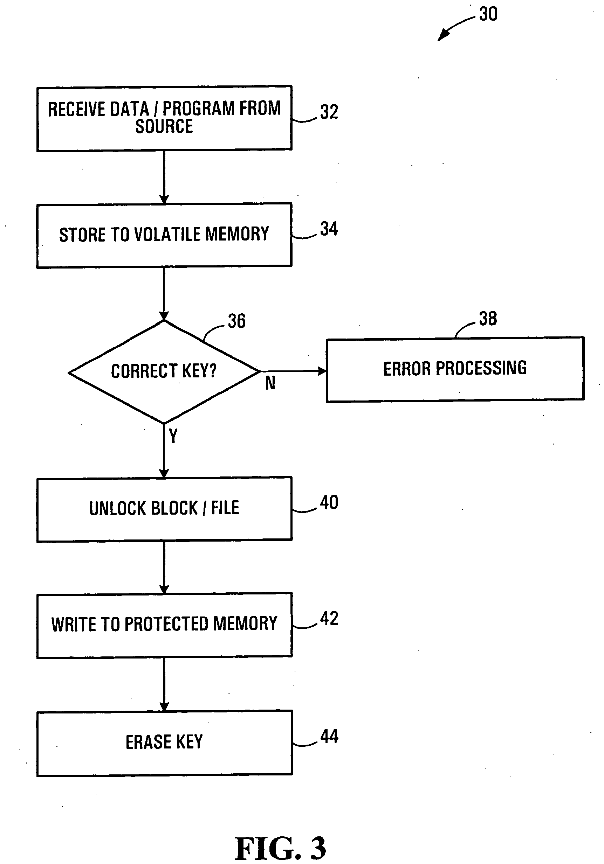

Fig. 3 is a flow diagram of a method of protecting memory according to an embodiment of the invention. Many of the operations shown in the method 30 have been described in detail above with reference to Fig. 1.

The method 30 begins at 32, when software program code or other data is received at an electronic device from an information source. In most instances, the information source is a remote computer system, although the received data may instead be data that is entered on the electronic device by a user or read by the device from a storage medium such as a diskette, CD, memory card, or subscriber identity module (SIM), for example.

At 34, the received data is stored to unprotected volatile memory. Volatile memory is preferred for this purpose, as described above, so that any memory protection keys embedded in received data does not persist in the event of a power loss, as may occur during a hardware security attack. If the received data is destined for unprotected memory, the method ends at 34.

Any data that is to be written to protected memory is further processed at 36 to determine whether a required memory protection key has been provided. As described above, such a key is preferably included at a predetermined location within the received data and extracted from the received data by a software subroutine or module that handles writing of the data to memory. Identification of the required key has also been described above.

Where the required key has not been provided, a memory write operation is denied and error processing is performed, as indicated at 38. Error processing preferably includes such operations as logging the error and returning an error or failure indication to the electronic device component, likely a software routine or module, that is attempting to write the data to protected memory. In some embodiments, a user of the electronic device is also alerted to a failed protected memory access operation. If the electronic device is enabled for sending communication signals, then such an alert is preferably sent to the entity that established the memory protection information for the protected memory location for which a memory write command was denied. In this manner, an audit trail may be established for unauthorized protected memory access attempts. Audit trails are often used to identify potentially malicious or defective software code, as well as information sources from which such code originates.

If a key match is determined at 36, the block, file, or data entry in protected memory is unlocked at 40, and the received data is written to the protected memory at 42. The received data, or at least the received key, is then erased from the volatile memory or otherwise rendered inaccessible or unrecoverable at 44 so that memory protection keys are maintained only in the key store 18.

The above description relates primarily to the operation of a memory protection system and associated methods. It should be appreciated, however, that techniques for configuring a memory and a processor of an electronic device are also provided in accordance with a further aspect of the invention. The memory store is configured into at least one protected memory locations and a key store operable to store an identifier of each protected memory location and a respective corresponding memory protection key. The processor is configured to provide a memory access manager which is operable to receive memory commands for altering contents of any of the at least one protected memory location, and for each memory command, to determine whether the memory command includes a memory protection key corresponding to each protected memory location to be modified, and where the memory command includes the memory protection key corresponding to each such protected memory location to be modified, to permit the memory command and then render each memory protection key in the command inaccessible.

What has been described is merely illustrative of the application of the principles of the invention. Other arrangements and methods can be implemented by those skilled in the art without departing from the spirit and scope of the present invention.

For example, although embodiments of the invention have been described primarily in the context of memory write operations, it will be appreciated that memory erase operations and any other memory operations that alter memory contents are also subject to memory protection controls established on an electronic device.

In the embodiments described above, entities other than a user of an electronic device establish and load memory protection information onto the electronic device before the device is provided to the user. However, it should be apparent that memory protection information may also be loaded onto the electronic device at a later time. Data security techniques are preferably used to provide a measure of confidentiality for memory protection information, which should be known only to the electronic device and the entity with which the memory protection information originates. Source authentication and data integrity checking for such memory protection information is also preferably provided, using digital signatures, for example.

In another embodiment, memory protection is applied to a key store on an electronic device. After memory protection information has been loaded into the key store for a particular memory location, that memory protection information is over-written or erased only if the key in the existing memory protection information is provided. Thus, memory protection information established by one entity cannot be replaced by any other entity without the corresponding memory protection key.

Protected memory need not necessarily be associated with a single entity. An entity may grant access to its protected memory locations by distributing its memory protection key to other entities, or by loading multiple memory protection keys into a key store for any shared protected memory locations, for example.

A memory command or data may also include multiple keys, including keys for both protected memory locations and unprotected memory locations, where a key is required to access any location in a memory device, for example. In this case, not all keys need necessarily be rendered inaccessible. It should also be appreciated that keys from the same memory command or data may be rendered inaccessible at different times, as memory access operations involved in performing a memory command are completed, for example.

## Claims

1. An electronic device (10) comprising: a memory (20, 22); a receiver (12) configured to receive data to be written to the memory; and a memory protection system associating protected memory locations (20) in the memory with respective corresponding keys (28), and configured to allow the received data to be written to any of the protected memory locations (20) only if the received data includes a key (28) corresponding to the protected memory location to which the received data is to be written and to render the corresponding key (28) in the received data inaccessible after allowing the received data to be written to the protected memory location (20), and
wherein the memory comprises unprotected memory locations (22) into which the received data is written, and
wherein each key (28) is rendered inaccessible by erasing the received data from the unprotected memory locations (22) where the memory access manager (16) allows the received data to be written to the protected memory locations (20),
wherein the memory protection system comprises:
a key store (18) storing a mapping table (24) that associates the protected memory locations (20) with the respective corresponding keys (28); and a memory access manager (16) configured to process memory a command for writing the received data to any of the protected memory locations (20), to determine whether the received data includes the key (28) corresponding to any of the protected memory locations (20) to which the received data is to be written, and, where the received data includes the key (28) corresponding to a protected memory location to which the received data is to be written, to permit the memory command and then render the corresponding key (28) in the received data inaccessible, and
wherein the memory comprises a file system, and wherein the key store (18) resides at a secure location in the memory outside the file system, and
wherein the receiver (12) comprises one or more components selected from the group consisting of: a wireless receiver, a wireless transceiver, a modem, a network interface, a serial port, a parallel port, a Universal Serial Bus (USB) port, an infrared port, and a short-range wireless communication module.

2. A memory protection system comprising:
a key store (18) storing identifiers (26) of protected memory locations (20) and respective corresponding memory protection keys (28); and a memory access manager (16)configured to receive a memory command for altering contents of any of the protected memory locations (20), and for each memory command, to determine whether the memory command includes a memory protection key (28) corresponding to at least one of said protected memory locations (20) to be altered, and, where the memory command includes the memory protection key (28) corresponding to each protected memory location to be altered, to permit the memory command and then render each memory protection key (28) in the command inaccessible.

3. The system of claim 2, wherein each of the memory protection keys (28) comprises a modified version of a data sequence, and wherein the modified version comprises a hash of the data sequence.

4. The system of any one of claims 2-3, wherein the key store (18) stores a mapping table (24) that maps each identifier (26) to a corresponding memory protection key (28) and optionally at least one of the identifiers (26) is mapped to multiple corresponding memory protection keys (28).

5. The system of any one of claims 2-4, implemented in an electronic device (10) having a memory, the memory comprising the protected memory locations (20) and unprotected memory locations (22) and wherein the memory access manager (16) is further configured to receive memory commands for altering contents of the unprotected memory locations (22), and to permit the memory commands for altering contents of the unprotected memory locations (22) and each memory command for altering contents of any protected memory location (20) that includes the memory protection key (28) corresponding to each protected memory location (20) to be altered, and
wherein the memory access manager (16) is further configured to perform each memory command that includes the memory protection key (28) corresponding to each protected memory location (20) to be altered.

6. The system of any one of claims 2-5, implemented in an electronic device (10), wherein the memory commands are received by the memory access manager (16) from an originating electronic device component, and wherein the originating electronic device component proceeds with each memory command permitted by the memory access manager (16) and wherein the originating electronic device component is a memory update module, and
wherein the originating electronic device component sends memory commands to the memory access manager (16) responsive to data received at the electronic device (10), and
wherein the originating electronic device component is further configured to extract a received memory protection key (28) from the received data and to provide the received memory protection key (28) to the memory access manager (16).

7. A method of protecting memory in an electronic device (10), comprising:
receiving a memory command (32) to alter a protected memory location; identifying a memory protection key (34) corresponding to the protected memory location; determining whether the memory command includes the memory protection key (36) corresponding to the protected memory location; permitting completion of the memory command (40) where the memory command includes the memory protection key (28) corresponding to the protected memory location; and rendering the memory protection key (40) in the memory command inaccessible.

8. The method of claim 7, wherein receiving comprises receiving the memory command from an originating electronic device component, and wherein permitting comprises allowing the originating electronic device component to perform the memory command.

9. The method of claim 7, further comprising: receiving data to be written to the protected memory location; and
generating the memory command responsive to receiving the data, and
wherein the received data comprises a received key (28), and wherein generating comprises extracting the received key (28) from the received data and inserting the received key (28) into the memory command, and
wherein determining comprises comparing the memory protection key (28) corresponding to the protected memory location with the received key (28) in the memory command, and
wherein determining comprises retrieving a modified version of the memory protection key (28) corresponding to the protected memory location, modifying the received key (28) in the memory command to generate a modified received key, and comparing the modified received key (28) to the modified version of the memory protection key (28) corresponding to the protected memory location.

10. The method of claim 7, further comprising: receiving data to be written to the protected memory location; and
generating the memory command responsive to receiving the data and
further comprising the step of: storing the received data to an unprotected memory location, wherein rendering the memory protection key (28) in the memory command inaccessible comprises erasing the received data (44) from the unprotected memory location upon completion of the memory command.

11. The method of any one of claims 7-10, wherein identifying comprises identifying a protected memory location in the memory command and accessing a mapping table (24) that maps protected memory locations (20) to respective corresponding memory protection keys (28).

12. The method of claim 7, wherein the memory command comprises one of a memory write command and a memory erase command,
further comprising: receiving memory commands to alter unprotected memory locations (22); and permitting completion of the memory commands to alter unprotected memory locations (22),
further comprising: receiving memory read commands; and permitting completion of the memory read commands.

13. The method of claim 7, wherein said identifying step comprises accessing the memory protection key (28) corresponding to the protected memory location in a key store (18), the method further comprising: receiving a command to establish a new protected memory location in the memory and a memory protection key (28) corresponding to the new protected memory location; establishing the new protected memory location in the memory; and storing the memory protection key (28) in the key store (18).

14. A method of manufacturing an electronic device, comprising:
configuring a memory store of an electronic device (10) into at least one protected memory location and a key store (18) operable to store an identifier (26) of each protected memory location and a respective corresponding memory protection key (28) ; and configuring a processor of the electronic device (10) to provide a memory access manager (16) operable to receive memory commands for altering contents of any of the at least one protected memory location, and for at least one memory command, to determine whether the memory command includes a memory protection key (28) corresponding to at least one protected memory location to be modified, said memory command including the memory protection key (28) corresponding to at least one said protected memory location to be modified, to permit the memory command and then render each corresponding memory protection key (28) in the command inaccessible.

15. The method of claim 14, wherein the memory store comprises the protected memory locations (20) and unprotected memory locations (22), and
wherein configuring the processor comprises installing memory access manager (16) software on the electronic device (10) for execution by the processor.

16. A computer-readable medium storing instructions for performing the method of claim 14 or claim 15, or for performing the method of any one of claim 7 to 10, or for performing the method of claim 15 and the memory access manager (16) software.
